(19) Europäisches Patentamt
European Patent Office
Office européen des brevets

(11) **EP 2 561 934 B1**

(12) **EUROPEAN PATENT SPECIFICATION**

(45) Date of publication and mention
of the grant of the patent:
**09.09.2015 Bulletin 2015/37**

(51) Int Cl.:
**B05D 7/00** *(2006.01)*          **C09D 7/12** *(2006.01)*
**C08K 7/22** *(2006.01)*          **C08K 9/10** *(2006.01)*

(21) Application number: **12176311.4**

(22) Date of filing: **13.07.2012**

(54) **Basecoat/ clearcoat coating**

Basisschicht-/Klarschichtbeschichtung

Revêtement de couche de fond/couche transparente

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.08.2011 CN 201110316594**

(43) Date of publication of application:
**27.02.2013 Bulletin 2013/09**

(73) Proprietors:
• **Rohm and Haas Company
Philadelphia,
Pennsylvania 19106-2399 (US)**
• **Dow Global Technologies LLC
Midland, MI 48674 (US)**

(72) Inventors:
• **Donovan, Megan
North Wales, PA 19454 (US)**

• **Namhata, Sarada
Ambler, PA 19002 (US)**
• **Fasula, Adam J.
Lansdale, PA 19446 (US)**
• **Nungesser, Edwin H.
Horsham, PA 19044 (US)**
• **Li, Qianqian (Jane)
200123 Pudong District (CN)**
• **Zhang, Wei
Maple Glen, PA 19002 (US)**

(74) Representative: **Houghton, Mark Phillip et al
Patent Outsourcing Limited
1 King Street
Bakewell, Derbyshire DE45 1DZ (GB)**

(56) References cited:
**EP-A1- 0 038 127     EP-A1- 2 338 613
US-A- 4 314 004**

**Description**

This invention relates to a basecoat/clearcoat system, particularly to a basecoat/matte clearcoat system applied to a substrate. This invention also relates to a method for providing a basecoat/matte clearcoat coating structure on a substrate. More particularly, this invention relates to a coated substrate including: (a) a substrate having at least one surface: and, disposed on the surface, (b) a first coating having a Pigment Volume Concentration ("PVC") higher than the critical PVC; and, disposed on the first coating, (c) a clear matte second coating including from 1% to 99% by weight, based on the weight of the second coating, a particulate polymer having a particle diameter of from 0.5 microns to 30 microns.

Clear overcoats are used in many applications particularly in the automotive finishing area. In this approach the color and the appearance attributes of the coating are built in the underlying coats (basecoats) and the clear topcoat is applied at the final step to preserve the appearance and provide a final surface luster to the finish. In automotive applications it is typical that the specular surface gloss of the finish is very high (very glossy).

The problem faced by the inventors relates to the low performance attributes normally observed in coatings having a Pigment Volume Concentration ("PVC" herein) higher than the critical pigment volume concentration. The pigment portion of this term includes all inorganic solid materials in the coating such as titanium dioxide, calcium carbonate, clays, talc, mica, zinc oxide, silica and other non-film forming solids such as spherical or non-spherical hard polymer particles. The equation for PVC is:

$$PVC= \frac{\text{Dry Volume of total inorganic pigment+extender+non-film forming solid material}}{\text{Dry (Volume of total inorganic pigment + extender + non-film forming solid material) + volume of film forming polymer.}}$$

The critical PVC of a coating is reached when there is not enough binder present to coat (or bind) all of the inorganic material in the coating formulation. At and over the critical PVC the continuity of the coating is disrupted and voids begin to form in the coating. Once discontinuity occurs, the coating loses physical strength and become porous. This weakens the coating and at least one or more of performance attributes such as abrasive scrub resistance, stain resistance, burnish resistance, water resistance, mar resistance, exterior durability and film tensile strength are reduced. Coating formulators use higher PVC as a means to lower the cost of a coating formulation. The reduction of cost is beneficial to coating formulators and consumers but these cost improvements are at the expense of performance loss.

U.S. Patent No. 4,403,003 discloses a multi-layer coating upon a substrate surface in which there is first applied to the surface a pigmented basecoat composition and then there is applied to the basecoat film a transparent topcoat composition.

It is desired to provide an aqueous, higher than CPVC basecoat/aqueous matte clearcoat system capable of providing a substrate coated therewith, and a method for providing the same, having performance superior to the basecoat composition itself along with maintaining the visual aspects of the basecoat and control of the topcoat gloss.

The present invention, in its various aspects, is as set out in the accompanying claims.

In a first aspect of the present invention there is provided a coated substrate comprising: (a) a substrate having at least one surface: and, disposed on said surface, (b) a first coating having a Pigment Volume Concentration ("PVC") higher than the critical PVC; and, disposed on said first coating, (c) a clear matte second coating comprising from 1% to 99% by weight, based on the weight of said second coating, a particulate polymer having a particle diameter of from 0.5 microns to 30 microns.

In a second aspect of the present invention there is provided a method for providing a coated substrate comprising: (a) providing a substrate having at least one surface; (b) applying to said surface a first aqueous coating having a Pigment Volume Concentration ("PVC") higher than the critical PVC to provide a first coating; (c) applying on said first coating a clear second aqueous coating comprising from 1% to 99% by weight, based on the weight of said second coating, particulate polymer having a particle diameter of from 0.5 microns to 30 microns; and (d) drying, or allowing to dry, said first and said second coating.

A "matte coating" herein is defined as a coating having lower gloss than a continuous coating including only an emulsion polymer of the same composition with an average particle diameter of 200 nm. A "clear coating" herein is defined as a coating, whether an aqueous coating or a dry coating, that is substantially free from inorganic particles such as are known in the art as pigments and extenders; in any event the coating includes from 0% to 10%, preferably from 0% to 5%, more preferably from 0 to 1%, and most preferably from 0 to 0.2%, by weight, based on the weight of the clear coating, of inorganic particles.

The substrate having at least one surface of the present invention may be opaque, transparent, translucent, or pigmented and includes, for example, wood, metal, plastics, leather, woven or nonwoven textiles, cementitious substrates such as, for example, concrete, stucco, and mortar, glass, plaster, drywall, previously painted or primed surfaces, and weathered surfaces. Substrates having surfaces including multiple phases such as, for example, oriented strand board, and layered substrates are also envisioned.

In the present invention the substrate has at least one surface bearing a first coating having a Pigment Volume Concentration ("PVC") higher than the critical PVC, as defined by the experimental method herein.

The first coating of the present invention typically includes a first polymeric binder, such as an emulsion polymer or a polyurethane dispersion, having a calculated Tg of from -60°C to 150°C and an average particle diameter of from 50 nm to 490 nm.

The first polymeric binder typically includes at least one nonionic copolymerized ethylenically unsaturated monomer such as, for example, a (meth)acrylic ester monomer including methyl (meth)acrylate, ethyl (meth)acrylate, butyl (meth)acrylate, 2-ethylhexyl (meth)acrylate, decyl (meth)acrylate, hydroxyethyl (meth)acrylate, hydroxypropyl (meth)acrylate, ureido-functional (meth)acrylates and acetoacetates, acetamides or cyanoacetates of (meth)acrylic acid; ethylene, styrene or substituted styrenes; vinyl toluene; butadiene; monoethylenically unsaturated acetophenone or benzophenone derivatives such as, for example are taught in US Patent No. 5,162,415; vinyl acetate or other vinyl esters; vinyl monomers such as vinyl chloride, vinylidene chloride, vinylidene fluoride, and N-vinyl pyrollidone; (meth)acrylonitrile; N-alkylol (meth)acrylamide. The use of the term "(meth)" followed by another term such as (meth)acrylate or (meth)acrylamide, as used throughout the disclosure, refers to both acrylates or acrylamides and methacrylates and methacrylamides, respectively. The first polymeric binder may also include urethane polymers and film-forming voided polymers such as core/shell polymeric particles having a core including, when dry, at least one void having a diameter of from 100 to 1200 nm; and an outer shell, substantially encapsulating the core and having a calculated Tg of from -60°C to 50°C. are disclosed in US Patent Application Publication No. US 20070043159A1.

In certain embodiments the first polymeric binder includes from 0% to 7%, by weight, based on the weight of the first polymeric binder, copolymerized multi-ethylenically unsaturated monomer. Multi-ethylenically unsaturated monomers include, for example, allyl (meth)acrylate, diallyl phthalate, 1,4-butylene glycol di(meth)acrylate, 1,2-ethylene glycol di(meth)acrylate, 1,6-hexanediol di(meth)acrylate, and divinyl benzene.

In certain embodiments the first polymeric binder includes from 0% to 7%, by weight, based on the weight of the first polymeric binder, copolymerized ethylenically unsaturated acid monomer. Acid monomers include carboxylic acid monomers such as, for example, acrylic acid, methacrylic acid, crotonic acid, itaconic acid, fumaric acid, maleic acid, monomethyl itaconate, monomethyl fumarate, monobutyl fumarate, and maleic anhydride; and sulfur- and phosphorous-containing acid monomers. Preferred acid monomers are carboxylic acid monomers. More preferred monomers are (meth)acrylic acid.

The calculated glass transition temperature ("Tg") of the first polymeric binder is from -60°C to 150°C, preferably from -20°C to 60°C. Tgs of the polymers herein are calculated by using the Fox equation (T.G. Fox, Bull. Am. Physics Soc., Volume 1, Issue No. 3, page 123(1956)). That is, for calculating the Tg of a copolymer of monomers M1 and M2,

$$1/Tg(calc.) = w(M1)/Tg(M1) + w(M2)/Tg(M2)$$

, wherein

Tg(calc.) is the glass transition temperature calculated for the copolymer
w(M1) is the weight fraction of monomer M1 in the copolymer
w(M2) is the weight fraction of monomer M2 in the copolymer
Tg(M1) is the glass transition temperature of the homopolymer of M1
Tg(M2) is the glass transition temperature of the homopolymer of M2, all temperatures being in °K.

The glass transition temperature of homopolymers may be found, for example, in "Polymer Handbook", edited by J. Brandrup and E.H. Immergut, Interscience Publishers.

The polymerization techniques used to prepare such first polymeric binders, including addition polymerization using an emulsion polymerization process, are well known in the art such as, for example, as disclosed in U.S. Patents No. 4,325,856; 4,654,397; and 4,814,373. Multistage and multiphase polymeric binders are also envisioned as are polymodal particle size and molecular weight distributions.

In the coated substrate of the present invention, disposed on the first coating, is a second layer. This layer is a clear matte second coating including from 1% to 99% by weight, based on the weight of the second coating, of a particulate polymer having a particle diameter of from 0.5 microns to 30 microns. The particulate polymer having a particle diameter of from 0.5 microns to 30 microns typically has a calculated Tg of from -60 C to 150 °C. Preferably, the particulate polymer having a particle diameter of from 0.5 microns to 30 microns particles are either: (a) particles having T$_g$ from 75°C to 150°C; or (b) particles having at least 0.5% polymerized residues of crosslinkers; or a combination thereof. When the particles have a Tg from -60°C to 75°C, preferably the particles include, as copolymerized units, from 0.5% to 10%, more preferably from 3% to 10%, multiethylenically unsaturated monomer, by weight based on the weight of the particulate polymer having a particle diameter of from 0.5 microns to 30 microns.

The particulate polymer having a particle diameter of from 0.5 microns to 30 microns may be formed by methods known in the art such as, for example emulsion polymerization, seeded growth processes, and suspension polymerization processes. Such polymers are described, for example, in US Patent Nos. 4,403,003; 7,768,602; and 7,829,626, and also exemplified herein. The polymer may be may be made in a single stage process, a multiple step process such as a core/shell process that may result in a multiphase particle or in a particle in which the phases co-mingle for a gradient of composition throughout the particle, or in a gradient process in which the composition is varied during one or more stages.

The particulate polymer includes, as copolymerized units ethylenically unsaturated monomer such as, for example, a (meth)acrylic ester monomer including methyl (meth)acrylate, ethyl (meth)acrylate, butyl acrylate, hydroxyethyl (meth)acrylate, hydroxypropyl (meth)acrylate, ureido-functional (meth)acrylates and acetoacetates, acetamides or cyanoacetates of (meth)acrylic acid; vinyl acetate or other vinyl esters; vinyl monomers such as vinyl chloride, vinylidene chloride, and N-vinyl pyrollidone; (meth)acrylonitrile; and N-alkylol (meth)acrylamide. The use of the term "(meth)" followed by another term such as (meth)acrylate or (meth)acrylamide, as used throughout the disclosure, refers to both acrylates or acrylamides and methacrylates and methacrylamides, respectively. In certain embodiments the particulate polymer includes a copolymerized multi-ethylenically unsaturated monomer such as, for example, allyl (meth)acrylate, diallyl phthalate, 1,4-butylene glycol di(meth)acrylate, 1,2-ethylene glycol di(meth)acrylate, 1,6-hexanediol di(meth)acrylate, and divinyl benzene. In certain embodiments the particulate polymer includes a copolymerized acid monomer including carboxylic acid monomers such as, for example, acrylic acid, methacrylic acid, crotonic acid, itaconic acid, fumaric acid, maleic acid, monomethyl itaconate, monomethyl fumarate, monobutyl fumarate, and maleic anhydride; and sulfur- and phosphorous-containing acid monomers. Preferred acid monomers are carboxylic acid monomers. More preferred monomers are (meth)acrylic acid. Particulate polymers useful for this invention also include polyurethane, polyurea, and polyolefin based materials.

Without being bound by a specific theory, it is believed that the clear matte second coating is formed from the clear second aqueous coating in such a manner that predominantly the particulate polymer having a particle diameter of from 0.5 microns to 30 microns retains its particulate nature in the dry coating. Typically, the film integrity of the clear matte second coating may benefit from film-forming solution or emulsion polymers in an amount of 1% to 99% by weight, based on the weight of the second coating. Optionally, coalescing agents, plasticizers, and the like may be used but not to a level or extent that would jeopardize the retention of the particulate nature of the particulate polymer having a particle diameter of from 0.5 microns to 30 microns.

In the method for providing a coated substrate of the present invention a first aqueous coating having a Pigment Volume Concentration ("PVC") higher than the critical PVC is applied to at least one surface of the substrate and then a clear second aqueous coating including from 1% to 99% by weight, based on the weight of the second coating, particulate polymer having a particle diameter of from 0.5 microns to 30 microns is applied to the first coating.

The first aqueous coating is prepared by techniques which are well known in the coatings art. First, pigment(s) and extenders are well dispersed in an aqueous medium under high shear such as is afforded by a COWLES mixer or, alternatively, predispersed pigments, extenders, colorants, or mixtures thereof are used. Then the polymeric binder is added under low shear stirring along with other coatings adjuvants as desired. The aqueous coating may include, in addition to the first polymeric binder and pigment(s), film-forming or non-film-forming solution or emulsion polymers in an amount of 0% to 300% by weight of the first polymeric binder, and conventional coatings adjuvants such as, for example, emulsifiers, coalescing agents, antifreezes, curing agents, buffers, neutralizers, thickeners, rheology modifiers, humectants, wetting agents, biocides, plasticizers, antifoaming agents, UV absorbers, fluorescent brighteners, light or heat stabilizers, chelating agents, dispersants, colorants, waxes, water-repellants, and anti-oxidants. In certain embodiments a photosensitive compound such as, for example, benzophenone or a substituted acetophenone or benzophenone derivative as is taught in US Patent No. 5,162,415 may be added. In certain embodiments the aqueous coating composition of the invention has a VOC (volatile organic compound) level of 150 or less g/liter of coating, alternatively of 100g/lter or less, or further alternatively of from 0 g/liter to 50 g/liter.

The clear second aqueous coating is prepared by techniques which are well known in the coatings art. The particulate polymer having a particle diameter of from 0.5 microns to 30 microns is added under low shear stirring along with other coatings adjuvants as desired. The clear second aqueous coating composition may contain, in addition to the particulate polymer having a particle diameter of from 0.5 microns to 30 microns, conventional coatings adjuvants such as, for example, film-forming polymer (such as, for example, emulsion polymers or polyurethane dispersions or aqueous alkyd dispersions), pigments, extenders, emulsifiers, coalescing agents, plasticizers, antifreezes, curing agents, buffers, neutralizers, thickeners, rheology modifiers, humectants, wetting agents, biocides, antifoaming agents, UV absorbers, fluorescent brighteners, light or heat stabilizers, chelating agents, dispersants, colorants, waxes, water-repellants, and anti-oxidants. In certain embodiments a photosensitive compound such as, for example, benzophenone or a substituted acetophenone or benzophenone derivative as is taught in US Patent No. 5,162,415 may be added. In certain embodiments the aqueous coating composition of the invention has a VOC (volatile organic compound) level of 150 or less g/liter of coating, alternatively of 100g/lter or less, or further alternatively, of from 0 g/liter to 50 g/liter.

The first aqueous coating composition is typically applied to a substrate surface using conventional coatings application methods such as, for example, curtain coater, brush, roller, and spraying methods such as, for example, air-atomized spray, air-assisted spray, airless spray, high volume low pressure spray, and air-assisted airless spray. The first aqueous coating composition is typically dried or partially dried before the application of the clear second aqueous coating. In certain embodiments the first aqueous coating (basecoat) has long since been applied and dried, but the topcoat is desirably applied to upgrade properties such as, for example, stain resistance, provided by the basecoat alone.

The clear second aqueous coating composition is typically applied to the first coating using conventional coatings application methods such as, for example, curtain coater, brush, roller, and spraying methods such as, for example, air-atomized spray, air-assisted spray, airless spray, high volume low pressure spray, and air-assisted airless spray.

Drying of the first and second coating, independently, may be allowed to proceed under ambient conditions such as, for example, at 5 °C to 35 °C. or the coating may be dried at elevated temperatures such as, for example, from 35 °C to 150 °C.

In some embodiments, a "matte clear coat" applied over a pigmented basecoat will result in color clarity that enables the color of the basecoat to be visually represented through the clear topcoat. This is typically assessed by visual observation examination of the color in the first coating (pigmented basecoat) and then after the clear topcoat is applied. But it can also be assessed using color methods and instrumentation used by those skilled in the art including determination of CIE Lab using equipment such as a spectrophotometer (for example Xrite USA model Xrite8400, XriteColor Master CM-2). When measuring color using this type of instrumentation it is typical to employ the spectral component included mode and under D65/10° observer conditions. After measuring Lab, it is also typical to calculate the color difference (delta E) between the basecoat and the topcoat. For these determinations a delta E difference less than or equal to 2.0 is typically observed for color clarity acceptability.

Abbreviations

| | |
|---|---|
| Butyl acrylate | BA |
| Allyl methacrylate | ALMA |
| Methyl methacrylate | MMA |
| Methacrylic acid | MAA |
| Isoascorbic acid | IAA |
| Sodium sulfoxylate formaldehyde | SSF |
| DI water = deionized water | |

TEST METHODS:

Determination of whether a coating is above or below critical PVC.

When a coating is above critical PVC air voids develop in the dry coating. At this point, the opacity of the coating is increased due to the relative differences in the refractive index between the coating components (typically 1.4-3.0) and air (1.0). More air incorporation leads to more light scattering (reflectance) and higher opacity. To determine if a coating is above or below critical PVC for the purposes of the present invention the difference in reflectance of the paint in the dry state and after re-wetting with a solvent that penetrates into the air voids of the dry paint, fills the void with a higher refractive index solvent and reduces the reflectivity of the coating is measured. The solvent used herein is ISOPAR™ L (ExxonMobil Corp.). When a coating is above critical PVC the reflectance of the coating will decrease by at least 0.3% from the initial reflectance value of the paint.

Measurement of Particle size. Particle diameters of from 0.5 microns to 30 microns herein are those measured using a Disc Centrifuge Photosedimentometer ("DCP") (CPS Instruments, Inc.) that separates modes by cedntrifugation and sedimentation through a sucrose gradient. The samples were prepared by adding 1-2 drops into 10 cc DI water containing 0.1% sodium lauryl sulfate.0.1cc of the sample was injected into the spinning disc filled with 15 cc. sucrose gradient. Samples were analyzed relative to a polystyrene calibration standard. Specific conditions were: sucrose gradient 2-8%; disc speed 10,000 rpm; calibration standard was 895 nm diameter polystyrene.

Sample a. Formation of seed polymer for use in preparing particulate polymer

Unless otherwise noted, the terms "charged" or "added" indicate addition of all the mixture at once. The following mixtures were prepared:

Table a.1 Reaction mixtures used in Sample a synthesis.

| Mixture | Component | Parts By Weight |
|---------|-----------|-----------------|
| A | Water | 208 |
| | Sodium Carbonate | 0.38 |
| B | BA | 98 |
| | Butylene Glycol Diacrylate | 0.25 |
| | ALMA | 2.0 |
| | 10% aqueous Sodium Dodecylbenzenesulfonate | 4.0 |
| | Water | 40 |
| C | Potassium Persulfate | 0.063 |
| | | |

A reactor equipped with stirrer and condenser and blanketed with nitrogen was charged with Mixture A and heated to 82°C. To the reactor contents was added 15% of Mixture B and 25% of Mixture C. The temperature was maintained at 82°C. and the reaction mixture was stirred for 1 hour, after which the remaining Mixture B and Mixture C were metered in to the reactor, with stirring, over a period of 90 minutes. Stirring was continued at 82 °C for 2 hours, after which the reactor contents were cooled to room temperature. The average diameter of the resulting emulsion particles was 0.2 $\mu$m, as measured by light scattering using a BI-90 Plus instrument from Brookhaven Instruments Company, 750 Blue Point Road, Holtsville, NY 11742.

Sample b. Formation of seed polymer for use in preparing particulate polymer

Table b.1 Reaction mixtures used in Sample b synthesis

| Material | Charges Wt. (g) | % Active | Solids Wt. (g) | % Active BOM |
|----------|-----------------|----------|----------------|--------------|
| Kettle Charge: | | | | |
| DI Water | 7425.0 | | | |
| Buffer | | | | |
| Sodium Carbonate | 3.9 | 100.0% | 3.9 | 0.08% |
| DI Water | 100.0 | | | |
| DI Water Rinse | 35.0 | | | |
| Kettle Additive | | | | |
| 50% Methyl-$\beta$-cyclodextrin | 97.7 | 50.0% | 48.8 | 1.01% |
| DI Water Rinse | 45.0 | | | |
| Seed | | | | |
| Seed from example 1 | 266.4 | 46.0% | 122.5 | 2.53% |
| DI Water Rinse | 315.0 | | | |
| Initial Catalyst | | | | |
| Ammonium Persulfate | 4.9 | 100.0% | | 0.10% |
| DI water | 50 | | | |
| Kettle Catalyst | | | | |
| Ammonium Persulfate | 4.9 | 100.0% | 4.9 | 0.10% |

(continued)

| Material | Charges Wt. (g) | % Active | Solids Wt. (g) | % Active BOM |
|---|---|---|---|---|
| DI Water | 100 | | | |
| Co-feed Catalyst | | | | |
| Ammonium Persulfate | 9.9 | 100.0% | 9.9 | 0.20% |
| DI Water | 450 | | | |
| Monomer Emulsion | | | | |
| DI Water | 1075.5 | | | |
| Sodium Dodecylbenzenesulfonate (23%) | 86.0 | 23.0% | 19.8 | 0.41% |
| BA | 3969.0 | 100.0% | 3969.0 | 81.8% |
| MMA | 873.0 | 100.0% | 873.0 | 18.0% |
| MAA | 9.9 | 100.0% | 9.9 | 0.2% |
| n-DDM Emulsion | | | | |
| DI Water | 1236.7 | | | |
| Sodium Dodecylbenzenesulfonate (23%) | 42.2 | 23.0% | 9.7 | 0.20% |
| n-DDM | 1067.4 | 100.0% | 1067.4 | 22.0% |
| End Of Feeds Rinses | | | | |
| DI Water (ME) | 180.0 | | | |
| DI Water (n-DDM) | 225.0 | | | |
| DI Water (Co-feed Catalyst) | 45.0 | | | |
| Chaser Promoter | | | | |
| FeSO4.7H2O | 0.26 | 100.00% | 0.3 | 0.005% |
| Versene | 0.36 | 100.00% | 0.7 | 0.015% |
| DI water | 45.0 | | | |
| DI water Rinse | 25.7 | | | |
| Chaser Catalyst #1 | | | | |
| Ammonium Persulfate | 1.53 | 100.0% | 1.5 | 0.03% |
| DI water | 67.5 | | | |
| DI water Rinse | 25.7 | | | |
| Chaser Activator #1 | | | | |
| SSF | 0.95 | 100.0% | 1.0 | 0.02% |
| DI water | 67.5 | | | |
| DI water Rinse | 25.7 | | | |
| Chaser Catalyst #2 | | | | |
| Ammonium Persulfate | 1.53 | 100.0% | 1.5 | 0.03% |
| DI water | 67.5 | | | |
| DI water Rinse | 25.7 | | | |
| Chaser Activator #2 | | | | |
| SSF | 0.95 | 100.0% | 1.0 | 0.02% |
| DI water | 67.5 | | | |

(continued)

| Material | Charges Wt. (g) | % Active | Solids Wt. (g) | % Active BOM |
|---|---|---|---|---|
| DI water Rinse | 25.7 | | | |
| Chaser Catalyst #3 | | | | |
| Ammonium Persulfate | 1.53 | 70.0% | 1.1 | 0.02% |
| DI water | 67.5 | | | |
| DI water Rinse | 25.7 | | | |
| Chaser Activator #3 | | | | |
| SSF | 0.95 | 100.0% | 1.0 | 0.02% |
| DI water | 67.5 | | | |
| DI water Rinse | 25.7 | | | |

Procedure:

Monomer Emulsion Preparation

Weighed and added the DI water to the emulsion tank. Turned on emulsion tank agitator. Weighed and added the DS-4 to the emulsion tank and agitated for 2 min. Added BA. Added MMA. Added MAA. Agitated for 5 min. Checked for stable ME.

n-DDM Emulsion Preparation

In order to get a stable n-DDM emulsion it is necessary to shear the emulsion to very small droplets using a high speed mixer.

Charged 1236.7 g of DI water to a one gallon container. Charged 42.23 g of sodium dodecylbenzenesulfonate (23%) and 1067.4 g of n-DDM to the container in that order. Agitated the mixture until the mixture became very thick and creamy.

Kettle Preparation :

Charged the kettle water to the reactor and heated to 88-90 °C. Started agitation and began a 30 min. nitrogen sparge. After 30 min turned off nitrogen sparge. Added buffer. Added kettle additive. Added kettle catalyst. Added Seed. With the kettle at 83-87 °C fed the ME over 240 minutes. Fed the n-DDM emulsion over 235 minutes. Fed the co-feed catalyst over 240 minutes. Controlled the temperature at 83-87 °C during feeds. When the n-DDM emulsion addition was complete, fed rinse over 5 min. When the ME and co-feed catalyst were complete, added rinses. Held the reactor at 83-87 °C for 15 min. Cooled to 70 °C. Added chaser promoter and held 15 min. Added chase I and held 15 min at 70 °C. Added chase II and held 15 min at 70 °C. Added chase III and held 15 min at 70 °C. Cooled to 40 C and filtered.

SAMPLE A. Formation of particulate polymer

Table A.1. Mixtures used in formation of Sample A

| Material | Charges Wt. (g) | % Active | Solids Wt. | % Active BOM |
|---|---|---|---|---|
| Kettle Charge: | | | | |
| DI Water | 7618 | | | |
| Seed | | | | |
| Oligomer seed Sample b | 66.5 | 33.0% | | 0.41% |
| DI Water (rinse) | 146.3 | | | |

(continued)

| Material | Charges Wt. (g) | % Active | Solids Wt. | % Active BOM |
|---|---|---|---|---|
| Monomer Emulsion I | | | | |
| Deionized Water | 2071.9 | | | |
| Sodium Dodecylbenzensulfonate (23%) | 80.8 | 23.0% | 18.6 | 0.35% |
| BA | 5113.0 | 100.0% | 5113.0 | 95.5% |
| α-Methylstyrene | 26.8 | 100.0% | 26.8 | 0.5% |
| ALMA | 214.2 | 100.0% | 214.2 | 4.0% |
| DI Water Rinse | 130.0 | | | |
| Initiator Emulsion | | | | |
| DI Water | 53.7 | 100.0% | | |
| Sodium Dodecylbenzensulfonate (23%) | 1.10 | 23.0% | 0.3 | 0.0038% |
| t-Butyl Per-2-ethylhexanoate (97%) | 24.44 | 97% | 23.7 | 0.36% |
| DI Water (Rinse) | 97.5 | | | |
| Co-feed Catalyst | | | | |
| t-Butyl Hydroperoxide (70%) | 7.02 | 70% | | 0.074% |
| DI Water | 474.5 | | | |
| DI Water (rinse) | 50 | | | |
| Co-feed Activator | | | | |
| IAA | 3.58 | 100.0% | 3.6 | 0.06% |
| DI Water | 474.5 | | | |
| DI Water Rinse) | 50.0 | | | |
| ME II | | | | |
| DI Water | 321.75 | | | |
| Sodium Dodecylbenzensulfonate | 16.15 | 23.0% | 3.7 | 0.06% |
| MMA | 1229 | 100.0% | 1228.5 | 95.9% |
| EA | 53.17 | 100.0% | 53.2 | 4.1% |
| DI Water Rinse) | 97.5 | | | |
| Stage II Promoter | | | | |
| DI Water | 26.61 | | | |
| FeSO4.7H2O | 0.04 | 100% | 0.04 | 0.00057% |
| Versene (1.0%) | 0.02 | 100% | 0.02 | 0.00024% |
| Chaser Catalyst | | | | |
| t-Butyl Hydroperoxide (70%) | 9.26 | 70.0% | 6.5 | 0.098% |
| DI Water | 344.5 | | 0.0 | |
| DI Water Rinse | 50 | | | |
| Chaser Activator | | | | |
| IAA | 4.68 | 100.0% | 4.7 | 0.071% |
| DI Water | 344.5 | | | |
| DI Water Rinse | 50 | | | |

Procedure:

Added kettle charge to the reactor and heated to 78° C. Turned on agitation. Made up ME I as follows: Added soap and water to the ME tank. Slowly stirred in BA, added ALMA. At 78 °C, added seed and rinsed water. Started ME I feed at 116.43 g/min. Did not let temperature fall below 63°C. When 1510 grams of ME I had been fed (20% of ME I) stopped ME I and held 30 min. Cooled to 65 °C. While cooling made up the initiator emulsion. With the reactor at 65°C, added the initiator emulsion and watched for exotherm. After peak exotherm, allowed the reaction mixture temperature to increase to 83 °C over 10 min. while resuming ME I through CF equipped with rotor stator at 116.43 g/min. When ME I was complete, added rinse. Cooled to 78 °C. Made up ME II in the order listed. At 78 °C, added stage II promoter (pre-mixed before adding), started co-feed catalyst and activator at 9.5 g/min over 50 min. Started ME II at 37.7g /min. over 45 min. Maintained 78 °C reaction temperature. When ME II and co-feeds were complete, added rinses. Cooled to 65 °C. At 65 °C, started chaser catalyst and activator at 8.60g/ min. over 40 min. When the chaser catalyst and activator were complete cooled to 25 °C. Filtered to remove any agglomeration.

EXAMPLE 1. Formation of first coating (basecoat) and PVC evaluation

Nine commercial white paints were applied to a Leneta chart form 5C using a 3 mil bird applicator. The coatings were allowed to cure over night in a constant temperature environment (23-26°C/50-60% relative humidity). After calibrating against a black standard, a 45/0 reflectometer (Novo-Shade Whiteness/ brightness meter Gardco™ Company) was used to measure the reflectance of the dried white coatings over the black portion of the Leneta chart in 3 locations. After the dried reflectance measurements were completed, Isopar™ L (Exxon Mobil Chemical Company) was applied to the white coating using a 1 inch paint brush until the surface was completely covered with the solvent. After 30 minutes the reflectance of the re-wet coating was measured over the black portion of the Leneta chart.

Table 1.1 Evaluation of PVC

| Commercial Paint | coating | Replicate | Y reflectance (dry) | Y reflectance (re-wet with iso-par L) | Y reflectance % decrease | Y reflectance average % decrease |
|---|---|---|---|---|---|---|
| | | | | | | |
| Commercial paint 1 | Basecoat | 1 | 90.7 | 86.8 | -4.30 | |
| Commercial paint 1 | Basecoat | 2 | 91.3 | 86.5 | -5.26 | -4.78 |
| | | | | | | |
| Commercial paint 2 | Basecoat | 1 | 88.3 | 88.1 | -0.23 | |
| Commercial paint 2 | Basecoat | 2 | 88.3 | 88.4 | 0.11 | |
| Commercial paint 2 | Basecoat | 3 | 88.8 | 88.5 | -0.34 | -0.15 |
| | | | | | | |
| Commercial paint 3 | Basecoat | 1 | 92.4 | 92 | -0.43 | |
| Commercial paint 3 | Basecoat | 2 | 92.1 | 91.9 | -0.22 | |
| Commercial paint 3 | Basecoat | 3 | 91.9 | 91.9 | 0.00 | -0.22 |
| | | | | | | |
| Commercial paint 4 | Basecoat | 1 | 87.8 | 84.9 | -3.30 | |

(continued)

| Commercial Paint | coating | Replicate | Y reflectance (dry) | Y reflectance (re-wet with iso-par L) | Y reflectance % decrease | Y reflectance average % decrease |
|---|---|---|---|---|---|---|
| Commercial paint 4 | Basecoat | 2 | 87.6 | 84.8 | -3.20 | |
| Commercial paint 4 | Basecoat | 3 | 87.8 | 84.9 | -3.30 | -3.27 |
| | | | | | | |
| Commercial paint 5 | Basecoat | 1 | 86.9 | 85.3 | -1.84 | |
| Commercial paint 5 | Basecoat | 2 | 87 | 85.3 | -1.95 | |
| Commercial paint 5 | Basecoat | 3 | 87 | 85.2 | -2.07 | -1.95 |
| | | | | | | |
| Commercial paint 6 | Basecoat | 1 | 86 | 85.6 | -0.47 | |
| Commercial paint 6 | Basecoat | 2 | 86.3 | 85.6 | -0.81 | |
| Commercial paint 6 | Basecoat | 3 | 86.1 | 85.6 | -0.58 | -0.62 |
| Commercial paint 7 | Basecoat | 1 | 82.3 | 71.9 | -12.64 | |
| Commercial paint 7 | Basecoat | 2 | 82.6 | 71.3 | -13.68 | |
| Commercial paint 7 | Basecoat | 3 | 82.5 | 71.8 | -12.97 | -13.10 |
| | | | | | | |
| Commercial paint 8 | Basecoat | 1 | 90.5 | 89.7 | -0.88 | |
| Commercial paint 8 | Basecoat | 2 | 90.6 | 89.7 | -0.99 | |
| Commercial paint 8 | Basecoat | 3 | 90.7 | 89.5 | -1.32 | -1.07 |
| | | | | | | |
| Commercial paint 9 | Basecoat | 1 | 93.3 | 92.7 | -0.64 | |
| Commercial paint 9 | Basecoat | 2 | 93.1 | 92.7 | -0.43 | |
| Commercial paint 9 | Basecoat | 3 | 93.3 | 92.5 | -0.86 | -0.64 |
| Commercial paints 1-9 had PVC greater than the critical PVC. | | | | | | |

EXAMPLE 2. Formation of clear second aqueous coating ("topcoat")

In a 1 liter plastic container added particulate polymer having a particle diameter of 4.5 microns (Ingredient 1 of Table 1.1) and initiated mixing using a lab pitch blade stirrer. While stirring (1) with a vortex, added in order: Ingredients 2, 3, 4, 5, 6, 7, 8, and 9 of Table 1.1. Binder ingredient 3 had a calculated Tg = -8.35 and an average particle diameter of 100 nm..

Table 2.1 Ingredients for clear second aqueous coating (topcoat)

|  | Material | Pounds/100 gallon |
|---|---|---|
| 1 | SAMPLE A | 421.6 |
| 2 | Clay dispersion | 33.6 |
| 3 | RHOPLEX™ VSR-50 | 296.9 |
| 4 | BYK-028 | 0.5 |
| 5 | TEXANOL™ | 6.8 |
| 6 | ACRYSOL™ RM-2020 | 7.3 |
| 7 | AMP-95 | 0.5 |
| 8 | Water | 72.8 |
| 9 | ACRYSOL™ RM-8w | 15 |
| Note: To prepare clay dispersion added 97.5g DI water into a 200ml plastic container. Slowly added 2.5g LAPONITE™ RD (Rockwood Additives Ltd.) to the water mix until completely dissolved. RHOPLEX™ and ACRYSOL™ are trademarks of the Dow Chemical Company. TEXANOL™ is a trademark of Eastman Chemical Company. | | |

EXAMPLE 3. Evaluation of coated substrate bearing first coating ("basecoat") alone vs. substrate bearing first coating and, disposed thereon, second coating ('topcoat")

Sample preparation: The first coating was mixed to ensure homogeneity of the paint and then applied using a 3mil bird type applicator to a Black Scrub Panel (Form P121-10N, Leneta company). After drying for a at least 16 hours at ambient conditions, a coat of clear-matt topcoat was applied on the top of the dried first coat using a 7mil DOW type applicator. The basecoat/clearcoat was allowed to dry for 7 days at ambient conditions.

After 7 days, household stains were applied uniformly across the clear-matt topcoat in 2 cm strips and remained on the coatings for 2 hours. After two hours, the residual stain on the topcoat were wiped essentially from the topcoat using a damp (water) cloth, the charts were then placed onto a Gardco Washability and Wear Tester (model D10, Paul N. Gardner Company) and the remaining stains were wiped from the surface of the topcoat using a soaked sponge wetted with tap water (15cc) and non-abrasive scrub medium (Leneta SC-1, 10cc). The total weight of the sponge and sponge holder were 1500 g maximum. The machine was run for 100 cycles to remove the remaining stains. The medium was washed from the charts with tap water and the charts were allowed to dry. After drying the amount of stain remaining was visually assessed and rated on a scale of 1-10; 1 is no stain removed and 10 is the entire stain is removed.

Stains used include: Coffee (Folgers ultra roasted 2 tablespoons/6 cups of water), Lipstick (Covergirl brand Really Red#575, Pen (Blue paper mate, comfort mate), Purple crayon (Crayola Brand), Black china marker, Mustard (French's yellow), Tea (Lipton brand), Grape juice (Welch's).

Table 3.1 Evaluation of stain resistance.

| commercial paint | coating | Replicate | Coffee | lipstick | Pen | Purple crayon | China marker | washable marker | mustard | Tea | Grape juice |
|---|---|---|---|---|---|---|---|---|---|---|---|
|  |  |  |  |  |  |  |  |  |  |  |  |
| Commercial paint 1 | Basecoat | 1 | 1 | 1 | 1 | 0 | 0 | 7 | 1 | 0 | 0 |
| Commercial paint 1 | Basecoat | 2 | 3 | 5 | 1 | 0 | 0 | 9 | 1 | 1 | 1 |

| | | | | | | | | | | | |
|---|---|---|---|---|---|---|---|---|---|---|---|
| Commercial paint 1 | Basecoat | 3 | 2 | 3 | 1 | 0 | 0 | 9 | 1 | 1 | 1 |
| Average basecoat | | | 2.0 | 3.0 | 1.0 | 0.0 | 0.0 | 8.3 | 1.0 | 0.7 | 0.7 |
| Commercial paint 1 | Base + topcoat | 1 | 2 | 3 | 2 | 8 | 3 | 10 | 4 | 2 | 2 |
| Commercial paint 1 | Base + topcoat | 2 | 2 | 3 | 2 | 8 | 3 | 10 | 5 | 2 | 2 |
| Commercial paint 1 | Base + topcoat | 3 | 2 | 3 | 2 | 8 | 3 | 10 | 4 | 2 | 2 |
| Average after topcoat | | | 2 | 3.0 | 2.0 | 8.0 | 3.0 | 10.0 | 4.3 | 2.0 | 2.0 |
| Stain resistance improvement | | | 0.0 | 0.0 | 1.0 | 8.0 | 3.0 | 1.7 | 3.3 | 1.3 | 1.3 |
| Commercial paint 2 | Basecoat | 1 | 1 | 5 | 2 | 0 | 0 | 10 | 1 | 0 | 0 |
| Commercial paint 2 | Basecoat | 2 | 1 | 5 | 1 | 0 | 0 | 10 | 1 | 0 | 0 |
| Commercial paint 2 | Basecoat | 3 | 0 | 5 | 2 | 0 | 0 | 10 | 1 | 0 | 0 |
| Average basecoat | | | 0.7 | 5.0 | 1.7 | 0.0 | 0.0 | 10.0 | 1.0 | 0.0 | 0.0 |
| Commercial paint 2 | Base + topcoat | 1 | 8 | 7 | 2 | 7 | 3 | 10 | 8 | 8 | 8 |
| Commercial paint 2 | Base + topcoat | 2 | 8 | 7 | 2 | 7 | 3 | 10 | 8 | 8 | 8 |
| Commercial paint 2 | Base + topcoat | 3 | 8 | 5 | 2 | 5 | 2 | 10 | 8 | 8 | 8 |
| Average after topcoat | | | 8 | 6.3 | 2.0 | 6.3 | 2.7 | 10.0 | 8.0 | 8.0 | 8.0 |
| Stain resistance improvement | | | 7.3 | 1.3 | 0.3 | 6.3 | 2.7 | 0.0 | 7.0 | 8.0 | 8.0 |
| Commercial paint 3 | Basecoat | 1 | 0 | 10 | 2 | 0 | 0 | 10 | 1 | 1 | 3 |
| Commercial paint 3 | Basecoat | 2 | 0 | 9 | 1 | 0 | 0 | 10 | 1 | 0 | 3 |
| Commercial paint 3 | Basecoat | 3 | 0 | 10 | 1 | 0 | 0 | 10 | 1 | 0 | 2 |
| Average basecoat | | | 0.0 | 9.7 | 1.3 | 0.0 | 0.0 | 10.0 | 1.0 | 0.3 | 2.7 |
| Commercial paint 3 | Base + topcoat | 1 | 6 | 4 | 2 | 9 | 6 | 10 | 6 | 6 | 7 |
| Commercial paint 3 | Base + topcoat | 2 | 5 | 4 | 2 | 9 | 6 | 10 | 6 | 4 | 4 |
| Commercial paint 3 | Base + topcoat | 3 | 5 | 4 | 2 | 9 | 6 | 10 | 6 | 4 | 4 |
| Average after topcoat | | | 5.3 | 4.0 | 2.0 | 9.0 | 6.0 | 10.0 | 6.0 | 4.7 | 5.0 |
| Stain resistance improvement | | | 5.3 | -5.7 | 0.7 | 9.0 | 6.0 | 0.0 | 5.0 | 4.3 | 2.3 |
| Commercial paint 4 | Basecoat | 1 | 1 | 2 | 2 | 0 | 0 | 4 | 1 | 0 | 0 |
| Commercial paint 4 | Basecoat | 2 | 1 | 1 | 2 | 0 | 0 | 3 | 1 | 0 | 0 |
| Commercial paint 4 | Basecoat | 3 | 1 | 2 | 2 | 0 | 0 | 4 | 1 | 0 | 0 |
| Average basecoat | | | 1.0 | 1.7 | 2.0 | 0.0 | 0.0 | 3.7 | 1.0 | 0.0 | 0.0 |
| Commercial paint 4 | Base + topcoat | 1 | 9 | 8 | 2 | 9 | 2 | 10 | 8 | 9 | 9 |
| Commercial paint 4 | Base + topcoat | 2 | 9 | 8 | 2 | 8 | 2 | 10 | 8 | 9 | 9 |
| Commercial paint 4 | Base + topcoat | 3 | 9 | 8 | 2 | 8 | 2 | 10 | 8 | 9 | 9 |
| Average after topcoat | | | 9 | 8.0 | 2.0 | 8.3 | 2.0 | 10.0 | 8.0 | 9.0 | 9.0 |
| Stain resistance improvement | | | 8.0 | 6.3 | 0.0 | 8.3 | 2.0 | 6.3 | 7.0 | 9.0 | 9.0 |
| Commercial paint 5 | Basecoat | 1 | 1 | 4 | 2 | 0 | 0 | 9 | 1 | 0 | 0 |
| Commercial paint 5 | Basecoat | 2 | 1 | 4 | 2 | 0 | 0 | 9 | 1 | 0 | 0 |
| Commercial paint 5 | Basecoat | 3 | 0 | 4 | 2 | 0 | 0 | 9 | 1 | 0 | 0 |
| Average basecoat | | | 0.7 | 4.0 | 2.0 | 0.0 | 0.0 | 9.0 | 1.0 | 0.0 | 0.0 |
| Commercial paint 5 | Base + topcoat | 1 | 10 | 9 | 2 | 7 | 3 | 10 | 1 | 10 | 10 |
| Commercial paint 5 | Base + topcoat | 2 | 10 | 8 | 2 | 6 | 2 | 10 | 1 | 10 | 10 |
| Commercial paint 5 | Base + topcoat | 3 | 10 | 8 | 2 | 5 | 2 | 10 | 1 | 10 | 10 |

| | | | | | | | | | | | |
|---|---|---|---|---|---|---|---|---|---|---|---|
| Average after topcoat | | | 10 | 8.3 | 2.0 | 6.0 | 2.3 | 10.0 | 1.0 | 10.0 | 10.0 |
| Stain resistance improvement | | | 9.3 | 4.3 | 0.0 | 6.0 | 2.3 | 1.0 | 0.0 | 10.0 | 10.0 |
| Commercial paint 6 | Basecoat | 1 | 0 | 8 | 2 | 0 | 0 | 10 | 1 | 0 | 1 |
| Commercial paint 6 | Basecoat | 2 | 0 | 8 | 2 | 0 | 0 | 10 | 1 | 0 | 1 |
| Commercial paint 6 | Basecoat | 3 | 0 | 8 | 2 | 0 | 0 | 10 | 1 | 0 | 1 |
| Average basecoat | | | 0.0 | 8.0 | 2.0 | 0.0 | 0.0 | 10.0 | 1.0 | 0.0 | 1.0 |
| Commercial paint 6 | Base + topcoat | 1 | 3 | 9 | 2 | 9 | 4 | 10 | 5 | 4 | 10 |
| Commercial paint 6 | Base + topcoat | 2 | 3 | 9 | 2 | 9 | 4 | 10 | 5 | 4 | 10 |
| Commercial paint 6 | Base + topcoat | 3 | 3 | 9 | 2 | 9 | 4 | 10 | 5 | 4 | 10 |
| Average after topcoat | | | 3 | 9.0 | 2.0 | 9.0 | 4.0 | 10.0 | 5.0 | 4.0 | 10.0 |
| Stain resistance improvement | | | 3.0 | 1.0 | 0.0 | 9.0 | 4.0 | 0.0 | 4.0 | 4.0 | 9.0 |
| Commercial paint 7 | Basecoat | 1 | 1 | 2 | 1 | 0 | 0 | 8 | 1 | 0 | 0 |
| Commercial paint 7 | Basecoat | 2 | 1 | 2 | 1 | 0 | 0 | 8 | 1 | 0 | 0 |
| Commercial paint 7 | Basecoat | 3 | 1 | 1 | 1 | 0 | 0 | 8 | 1 | 0 | 0 |
| Average basecoat | | | 1.0 | 1.7 | 1.0 | 0.0 | 0.0 | 8.0 | 1.0 | 0.0 | 0.0 |
| Commercial paint 7 | Base + topcoat | 1 | 2 | 6 | 2 | 7 | 2 | 10 | 5 | 2 | 2 |
| Commercial paint 7 | Base + topcoat | 2 | 2 | 6 | 2 | 7 | 2 | 10 | 5 | 2 | 2 |
| Commercial paint 7 | Base + topcoat | 3 | 2 | 7 | 2 | 7 | 2 | 10 | 5 | 4 | 4 |
| Average after topcoat | | | 2 | 6.3 | 2.0 | 7.0 | 2.0 | 10.0 | 5.0 | 2.7 | 2.7 |
| Stain resistance improvement | | | 1.0 | 4.7 | 1.0 | 7.0 | 2.0 | 2.0 | 4.0 | 2.7 | 2.7 |
| Commercial paint 8 | Basecoat | 1 | 1 | 2 | 1 | 0 | 0 | 4 | 1 | 0 | 1 |
| Commercial paint 8 | Basecoat | 2 | 1 | 2 | 1 | 0 | 0 | 3 | 1 | 0 | 1 |
| Commercial paint 8 | Basecoat | 3 | 1 | 2 | 1 | 0 | 0 | 3 | 1 | 0 | 1 |
| Average basecoat | | | 1.0 | 2.0 | 1.0 | 0.0 | 0.0 | 3.3 | 1.0 | 0.0 | 1.0 |
| Commercial paint 8 | Base + topcoat | 1 | 2 | 8 | 2 | 8 | 2 | 10 | 6 | 2 | 3 |
| Commercial paint 8 | Base + topcoat | 2 | 2 | 7 | 2 | 6 | 2 | 10 | 6 | 2 | 3 |
| Commercial paint 8 | Base + topcoat | 3 | 2 | 7 | 2 | 7 | 2 | 10 | 6 | 2 | 3 |
| Average after topcoat | | | 2 | 7.3 | 2.0 | 7.0 | 2.0 | 10.0 | 6.0 | 2.0 | 3.0 |
| Stain resistance improvement | | | 1.0 | 5.3 | 1.0 | 7.0 | 2.0 | 6.7 | 5.0 | 2.0 | 2.0 |
| Commercial paint 9 | Basecoat | 1 | 2 | 7 | 1 | 0 | 0 | 10 | 1 | 0 | 0 |
| Commercial paint 9 | Basecoat | 2 | 1 | 7 | 1 | 0 | 0 | 10 | 1 | 0 | 0 |
| Commercial paint 9 | Basecoat | 3 | 2 | 7 | 1 | 0 | 0 | 10 | 1 | 0 | 0 |
| Average basecoat | | | 1.7 | 7.0 | 1.0 | 0.0 | 0.0 | 10.0 | 1.0 | 0.0 | 0.0 |
| Commercial paint 9 | Base + topcoat | 1 | 2 | 3 | 2 | 8 | 5 | 10 | 4 | 2 | 5 |
| Commercial paint 9 | Base + topcoat | 2 | 2 | 3 | 2 | 8 | 4 | 10 | 4 | 2 | 5 |
| Commercial paint 9 | Base + topcoat | 3 | 2 | 3 | 2 | 8 | 3 | 10 | 4 | 2 | 5 |
| Average after topcoat | | | 2 | 3.0 | 2.0 | 8.0 | 4.0 | 10.0 | 4.0 | 2.0 | 5.0 |
| Stain resistance improvement | | | 0.3 | -4.0 | 1.0 | 8.0 | 4.0 | 0.0 | 3.0 | 2.0 | 5.0 |

Coated substrates of the invention (bearing base + topcoat) exhibit substantial stain resistance improvement relative to the basecoat only coated substrates.

**Claims**

1. A coated substrate comprising:

(a) a substrate having at least one surface: and, disposed on said surface,
(b) a first coating having a Pigment Volume Concentration ("PVC") higher than the critical PVC, i.e. when there is not enough binder present to coat (or bind) all of the inorganic material in the coating; and, disposed on said first coating,
(c) a clear matte second coating comprising from 1% to 99% by weight, based on the weight of said second coating, of a particulate polymer having a particle diameter of from 0.5 microns to 30 microns.

2. The coated substrate of claim 1 wherein said second coating further comprises from 1% to 99% by weight, based on the weight of said second coating, film-forming emulsion polymer or polyurethane dispersion.

3. The coated substrate of claim 1 wherein said first coating comprises core/shell polymeric particles having a core comprising, when dry, at least one void having a diameter of from 100 to 1200 nm; and an outer shell, substantially encapsulating said core and having a calculated Tg of from -60°C to 50°C.

4. A method for providing a coated substrate comprising:

(a) providing a substrate having at least one surface;
(b) applying to said surface a first aqueous coating having a Pigment Volume Concentration ("PVC") higher than the critical PVC, i.e. when there is not enough binder present to coat (or bind) all of the inorganic material in the coating, to provide a first coating;
(c) applying on said first coating a clear second aqueous coating comprising from 1% to 99% by weight, based on the weight of said second coating, of a particulate polymer having a particle diameter of from 0.5 microns to 30 microns; and
(d) drying, or allowing to dry, said first and said second coating.

5. The method of claim 4 wherein said clear second aqueous coating has a VOC of from 0 g/liter to 50 g/liter.

6. Use, for improving the stain resistance of a first coating having a PVC higher than the critical PVC, i.e. when there is not enough binder present to coat (or bind) all of the inorganic material in the coating, of a clear second aqueous coating comprising from 1% to 99% by weight, based on the weight of said second coating, of a particulate polymer having a particle diameter of from 0.5 microns to 30 microns, by applying said second coating on said first coating and either drying it or allowing it to dry.

7. The use of claim 6 wherein said clear second aqueous coating has a VOC of from 0 g/liter to 50 g/liter.

8. The method of claim 4 or use of claim 6 wherein said second coating further comprises from 1% to 99% by weight, based on the dry weight of said second coating, film-forming emulsion polymer or polyurethane dispersion.

9. The method of claim 4 or use of claim 6 wherein said first coating comprises core/shell polymeric particles having a core comprising, when dry, at least one void having a diameter of from 100 to 1200 nm; and an outer shell, substantially encapsulating said core and having a calculated Tg of from -60°C to 50°C.

**Patentansprüche**

1. Ein beschichtetes Substrat, das Folgendes beinhaltet:

(a) ein Substrat, das mindestens eine Oberfläche aufweist, und, angeordnet auf dieser Oberfläche,
(b) eine erste Beschichtung, die eine Pigmentvolumenkonzentration ("PVC") aufweist, die höher als die kritische PVC ist, d. h. wenn nicht ausreichend Bindemittel vorhanden ist, um das gesamte anorganische Material in der Beschichtung zu beschichten (oder zu binden); und, angeordnet auf der ersten Beschichtung,
(c) eine klare matte zweite Beschichtung, die von 1 Gew.-% bis 99 Gew.-%, bezogen auf das Gewicht der zweiten Beschichtung, eines Partikelpolymers mit einem Partikeldurchmesser von 0,5 Mikrometer bis 30 Mikrometer beinhaltet.

2. Beschichtetes Substrat gemäß Anspruch 1, wobei die zweite Beschichtung ferner von 1 Gew.-% bis 99 Gew.-%, bezogen auf das Gewicht der zweiten Beschichtung, filmbildendes Emulsionspolymer oder Polyurethandispersion beinhaltet.

3. Beschichtetes Substrat gemäß Anspruch 1, wobei die erste Beschichtung Kern-Schale-Polymerpartikel mit einem Kern, beinhaltend, wenn trocken, mindestens einen Hohlraum mit einem Durchmesser von 100 bis 1200 nm; und eine äußere Schale, die den Kern im Wesentlichen einkapselt und eine berechnete Tg von -60 °C bis 50 °C aufweist, beinhaltet.

4. Ein Verfahren zum Bereitstellen eines beschichteten Substrats, das Folgendes beinhaltet:

(a) Bereitstellen eines Substrats, das mindestens eine Oberfläche aufweist;
(b) Anwenden einer ersten wässrigen Beschichtung mit einer Pigmentvolumenkonzentration ("PVC"), die höher als die kritische PVC ist, d. h. wenn nicht ausreichend Bindemittel vorhanden ist, um das gesamte anorganische Material in der Beschichtung zu beschichten (oder zu binden), auf die Oberfläche, um eine erste Beschichtung bereitzustellen;
(c) Anwenden einer klaren zweiten wässrigen Beschichtung, die von 1 Gew.-% bis 99 Gew.-%, bezogen auf das Gewicht der zweiten Beschichtung, eines Partikelpolymers mit einem Partikeldurchmesser von 0,5 Mikrometer bis 30 Mikrometer beinhaltet, auf die erste Beschichtung; und
(d) Trocknen, oder Trocknenlassen, der ersten und zweiten Beschichtung.

5. Verfahren gemäß Anspruch 4, wobei die klare zweite wässrige Beschichtung eine flüchtige organische Verbindung von 0 g/Liter bis 50 g/Liter aufweist.

6. Verwendung zum Verbessern der Fleckenbeständigkeit einer ersten Beschichtung mit einer PVC, die höher als die kritische PVC ist, d. h. wenn nicht ausreichend Bindemittel vorhanden ist, um das gesamte anorganische Material in der Beschichtung zu beschichten (oder zu binden), einer klaren zweiten wässrigen Beschichtung, die von 1 Gew.-% bis 99 Gew.-%, bezogen auf das Gewicht der zweiten Beschichtung, eines Partikelpolymers mit einem Partikeldurchmesser von 0,5 Mikrometer bis 30 Mikrometer beinhaltet, durch das Anwenden der zweiten Beschichtung auf die erste Beschichtung und entweder deren Trocknen oder deren Trocknenlassen.

7. Verwendung gemäß Anspruch 6, wobei die klare zweite wässrige Beschichtung eine flüchtige organische Verbindung von 0 g/Liter bis 50 g/Liter aufweist.

8. Verfahren gemäß Anspruch 4 oder Verwendung gemäß Anspruch 6, wobei die zweite Beschichtung ferner von 1 Gew.-% bis 99 Gew.-%, bezogen auf das Gewicht der zweiten Beschichtung, filmbildendes Emulsionspolymer oder Polyurethandispersion beinhaltet.

9. Verfahren gemäß Anspruch 4 oder Verwendung gemäß Anspruch 6, wobei die erste Beschichtung Kern-Schale-Polymerpartikel mit einem Kern, beinhaltend, wenn trocken, mindestens einen Hohlraum mit einem Durchmesser von 100 bis 1200 nm; und eine äußere Schale, die den Kern im Wesentlichen einkapselt und eine berechnete Tg von -60 °C bis 50 °C aufweist, beinhaltet.

**Revendications**

1. Un substrat revêtu comprenant :

(a) un substrat ayant au moins une surface ; et, disposé sur ladite surface,
(b) un premier revêtement ayant une concentration pigmentaire volumique (« CPV ») supérieure à la CPV critique, c.-à-d., lorsqu'il n'y a pas suffisamment de liant présent pour revêtir (ou lier) la totalité du matériau inorganique dans le revêtement ; et, disposé sur ledit premier revêtement,
(c) un deuxième revêtement mat limpide comprenant de 1 % à 99 % en poids, rapporté au poids dudit deuxième revêtement, d'un polymère en particules ayant un diamètre de particule allant de 0,5 micron à 30 microns.

2. Le substrat revêtu de la revendication 1 dans lequel ledit deuxième revêtement comprend en sus de 1 % à 99 % en poids, rapporté au poids dudit deuxième revêtement, d'un polymère en émulsion ou d'une dispersion de polyuréthane filmogènes.

3. Le substrat revêtu de la revendication 1 dans lequel ledit premier revêtement comprend des particules polymériques à coeur/enveloppe ayant un coeur qui comprend, lorsqu'il est sec, au moins un vide ayant un diamètre faisant de 100 à 1 200 nm ; et une enveloppe externe qui encapsule substantiellement ledit coeur et a une Tg calculée allant de -60 °C à 50 °C.

EP 2 561 934 B1

**4.** Une méthode pour fournir un substrat revêtu comprenant le fait :

(a) de fournir un substrat ayant au moins une surface ;
(b) d'appliquer sur ladite surface un premier revêtement aqueux ayant une concentration pigmentaire volumique (« CPV ») supérieure à la CPV critique, c.-à-d., lorsqu'il n'y a pas suffisamment de liant présent pour revêtir (ou lier) la totalité du matériau inorganique dans le revêtement, afin de fournir un premier revêtement ;
(c) d'appliquer sur ledit premier revêtement un deuxième revêtement aqueux limpide comprenant de 1 % à 99 % en poids, rapporté au poids dudit deuxième revêtement, d'un polymère en particules ayant un diamètre de particule allant de 0,5 micron à 30 microns ; et
(d) de sécher, ou de laisser sécher, ledit premier et ledit deuxième revêtement.

**5.** La méthode de la revendication 4 dans laquelle ledit deuxième revêtement aqueux limpide a un COV allant de 0 g/litre à 50 g/litre.

**6.** Utilisation, pour améliorer la résistance aux taches d'un premier revêtement ayant une CPV supérieure à la CPV critique, c.-à-d., lorsqu'il n'y a pas suffisamment de liant présent pour revêtir (ou lier) la totalité du matériau inorganique dans le revêtement, d'un deuxième revêtement aqueux limpide comprenant de 1 % à 99 % en poids, rapporté au poids dudit deuxième revêtement, d'un polymère en particules ayant un diamètre de particule allant de 0,5 micron à 30 microns, en appliquant ledit deuxième revêtement sur ledit premier revêtement et en le séchant ou en le laissant sécher.

**7.** L'utilisation de la revendication 6 dans laquelle ledit deuxième revêtement aqueux limpide a un COV allant de 0 g/litre à 50 g/litre.

**8.** La méthode de la revendication 4 ou l'utilisation de la revendication 6 dans lesquelles ledit deuxième revêtement comprend en sus de 1 % à 99 % en poids, rapporté au poids sec dudit deuxième revêtement, d'un polymère en émulsion ou d'une dispersion de polyuréthane filmogènes.

**9.** La méthode de la revendication 4 ou l'utilisation de la revendication 6 dans lesquelles ledit premier revêtement comprend des particules polymériques à coeur/enveloppe ayant un coeur qui comprend, lorsqu'il est sec, au moins un vide ayant un diamètre faisant de 100 à 1 200 nm ; et une enveloppe externe qui encapsule substantiellement ledit coeur et a une Tg calculée allant de -60 °C à 50 °C.

17

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4403003 A
- US 5162415 A
- US 20070043159 A1
- US 4325856 A
- US 4654397 A
- US 4814373 A
- US 7768602 B
- US 7829626 B

**Non-patent literature cited in the description**

- **T.G. FOX.** *Bull. Am. Physics Soc.,* 1956, vol. 1 (3), 123
- Polymer Handbook. Interscience Publishers